# EUROPEAN PATENT SPECIFICATION

(11) **EP 0 555 062 B1**
(45) Date of publication and mention of the grant of the patent: **10.01.1996**
(21) Application number: 93300772.6
(22) Date of filing: 03.02.1993
(51) Int. Cl.: B21C 37/00

(54) **Clad wire rod**
Plattiertes Stäbchen
Barre à fil gainée

(30) Priority: 05.02.1992 JP 56377/92
(43) Date of publication of application: 11.08.1993
(73) Proprietor: SUMITOMO METAL INDUSTRIES, LTD., Osaka-shi, Osaka-fu 540 (JP); SANYO SPECIAL ALLOYS, LTD., Shimotuka-Gun, Tochigi-Ken 329-01 (JP)
(72) Inventor: Nakasuji, Kazuyuki, Hyogo-ken, 662 (JP); Takashima, Masaki, Shimotuka-gun, Tochigi-ken, 329-01 (JP)
(74) Representative: Charlton, Peter John

(56) References cited:
- PATENT ABSTRACTS OF JAPAN vol. 016, no. 494 (M-1324)13 October 1992 & JP-A-41 82 023 (SUMITOMO METAL IND LTD) 29 June 1992
- PATENT ABSTRACTS OF JAPAN vol. 16, no. 487 (M-1323)9 October 1992 & JP-A-41 78 284 (YAMAHA CORP) 25 June 1992
- PATENT ABSTRACTS OF JAPAN vol. 11, no. 203 (P-591)2 July 1987 & JP-A-62 025 726 (TANAKA KIKINZOKU KOGYO KK) 3 February 1987
- PATENT ABSTRACTS OF JAPAN vol. 11, no. 203 (P-591)2 July 1987 & JP-A-62 025 725 (TANAKA KIKINZOKU KOGYO KK) 3 February 1987
- PATENT ABSTRACTS OF JAPAN vol. 14, no. 271 (M-0983)12 June 1990 & JP-A-20 80 238 (TANAKA KIKINZOKU KOGYO KK) 20 March 1990
- PATENT ABSTRACTS OF JAPAN vol. 15, no. 178 (M-1110)8 May 1991 & JP-A-30 42 239 (SUMITOMO METAL IND LTD) 22 February 1991
- DATABASE WPIL Week 8820, Derwent Publications Ltd., London, GB; AN 88-136829 & JP-A-63 078 741 (KOBE STEEL KK) 8 April 1988
- DATABASE WPIL Week 8743, Derwent Publications Ltd., London, GB; AN 87--302715 & JP-A-62 212 138 (KOBE STELL KK) 18 September 1987
- Metals Handbook,ASM,Desk Ed., 1985, p.9.1-9.3.
- Titanium / A Technical Guide, ASM Int., Matthew J. Donachie Jr. 1988, p.323-371.
- Practical Shape Memory Alloy, Yuuichi Suzuki, 1987, p.16-27.
- New Material / Basis and Application for Inorganic Material, Fujita, p.137-159.

## Description

This invention relates to a clad wire rod showing large shape recovery force with excellent corrosion resistance and workability, and also a clad wire rod fabricated to an ornament such as an eyeglass frame, etc.

An extensive study including the development of applications has been undertaken for shape memory alloys which have shape memory effect, super-elastic properties, pseudo-elastic properties and the like.

In general, a Ni-Ti shape memory alloy is superior to a Cu-Zn shape memory alloy in many viewpoints, for example, corrosion resistance, recovery force and recovery rate to the external force and heat, life time and the like. Therefore, the Ni-Ti shape memory alloy has been tried to be applied to an eyeglass frame or the like, one of the ornaments, particularly focusing on its corrosion resistance and super-elastic properties (U.S. Patent 4,772,112).

However, the above Ni-Ti alloy is inferior in workability, especially in cold workability, moreover making it difficult to remove surface defects generated during being worked. Since the eyeglass frame is required to be fine and exquisite, in the case where the Ni-Ti alloy is employed, the working steps increase and the fabricating cost raises.

The Ni-Ti alloy is also inferior in plating, grinding or polishing, therefore the surface treatment is difficult. Moreover, since the alloy contains Ni, the skin may get rough due to the Ni allergy if the alloy without any coating treatment such as plating is used for a part which directly touches the skin. Further, as the Ni-Ti shape memory alloy has difficulty in soldering, it cannot be applied to an ornament to be fabricated in a simple shape.

In the meantime, inventors of this invention have proposed a clad wire rod which improves the workability of the Ni-Ti alloy without losing the shape recovery force and corrosion resistance (Japanese patent Application Laid-Open No. 3-82775 (1991)). The proposed clad wire rod coated with an outside layer of Ti on the Ni-Ti shape memory alloy, whereby the workability is improved while the surface defects generated during being worked can be easily removed.

Although the workability is greatly improved according to the proposal, some parts of the eyeglass frame require extremely high degree of cold working, and if the part necessitates cold working degree exceeding the bonding force between the Ni-Ti shape memory alloy and the outside layer, the proposed clad wire cannot be used in above described cases by the reasons as follow.

That is, if the core material is not appropriately bonded to the outside layer after cold working, the clad metal cannot be applied for the product where an exposed end face of the clad wire rod, for example, a bridge or temple of the eyeglass frame results in poor appearance.

As for the eyeglass, since the external force acts to the frame as one puts on and off the eyeglass frame in use, a debonding part of the clad wire spreads, if any, causes breakage of the frame.

Further, if a bonding interface at soldered part is not properly bonded in fabricating of the frame, debonding starts from a void or the like in use of the frame as same as the above and extends, which breaks the outside layer of the rim where the temple or bridge is mounted, finally damaging the frame.

As described hereinbefore, if the bonding state of the bonding interface of the clad wire rod is not good, not only the product quality deteriorates, but the frame probably breaks in use. The bonding state of bonding interface of the clad wire rod is therefore of great importance.

A method of obtaining a clad wire rod having strong boding force by interposing an intermediate layer is proposed (Japanese Patent Application Laid-Open No. 63-78741 (1988)). The proposal relates to a composite with a core of Ti or Ti alloy interposing a Nb between the core and outside layer. Since the composite needs hard soldering for use in an eyeglass, the composite is heated to high temperatures. EP-A-0 146 317 discloses the use of Ni-Ti shape memory alloys in eyeglass frames. Use of an intermediate bonding layer is not mentioned.

The inventors of the invention has found out that an intermetallic compound is generated in the interfaces between the Nb and the inside and outside layers due to the heating and deteriorates corrosion resistance and bonding properties.

This invention has been devised to solve the aforementioned demerits and has for its object to provide a clad wire rod, as defined in claim 1, which has the bonding force resistible to high degree cold working without losing the shape recovery force and corrosion resistance. Preferred embodiments are given in the dependent claims.

The above and further objects and features of the invention will more fully be apparent from the following detailed description with accompanying drawings.
Fig. 1 is a a longitudinal cross sectional view of a cladding material for a clad wire rod of this invention;
Fig. 2 is a cross sectional view taken along the line II-II of Fig. 1;
Fig. 3 is a perspective view showing the appearance of an eyeglass frame;
Fig. 4 is a cross sectional view after the clad wire rod being worked to a rim or a temple;
Fig. 5 is a longitudinal cross sectional view of a cladding material for a gold-clad shape memory alloy wire rod of this invention; and
Fig. 6 is a cross sectional view taken along the line VI-VI of Fig. 5 or a cross sectional view of another clad wire rod of this invention.

Now, this invention will be discussed hereinafter in a concrete manner with reference to the accompanying drawings showing preferred embodiments thereof.

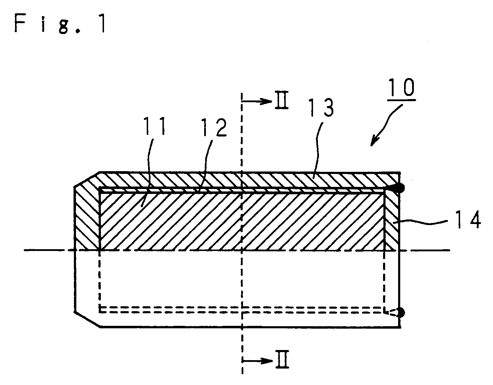

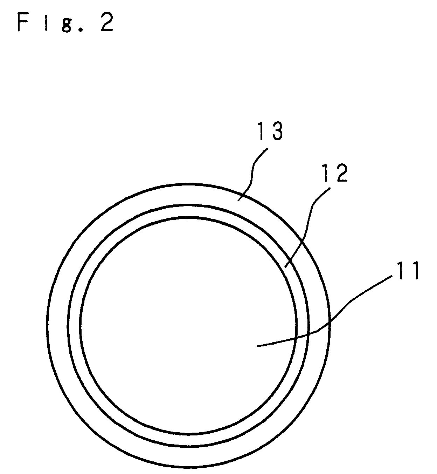

Fig. 1 is a longitudinal cross sectional view of a cladding material according to the invention after a core material, an intermediate layer material and an outside layer material being fitted. Fig. 2 is a cross sectional structural view taken along the line II-II of Fig. 1. In the cladding material 10, a round rod core material 11 of a Ni-Ti alloy is fitted in an intermediate layer material 12, which is further fitted in a metallic bottomed cylindrical outside layer material 13. A Ni-Ti alloy (47-60 atom%Ni) is used for the core material 11. A Ni-Ti alloy is used because of its light-weight and corrosion resistance against sweat, cosmetics, etc.

After adjusting the cladding material 10 in a vacuum chamber kept at a predetermined degree of vacuum, the same material is rigidly welded to an opening of the outside layer material 13 by electron beam welding, thus forming a lid 14. The cladding material 10 formed in the above-described manner is held in the high vacuum degree of approximately 2-3× 10⁻⁴ Torr inside. Thereafter, the cladding material 10 is heated to 800-1000°C and hot extruded by an extrusion press to have the outside diameter of 15mm. After repeating cold drawing and softening of the clad material, a clad wire having the outside diameter of 1.8-3.2mm is obtained.

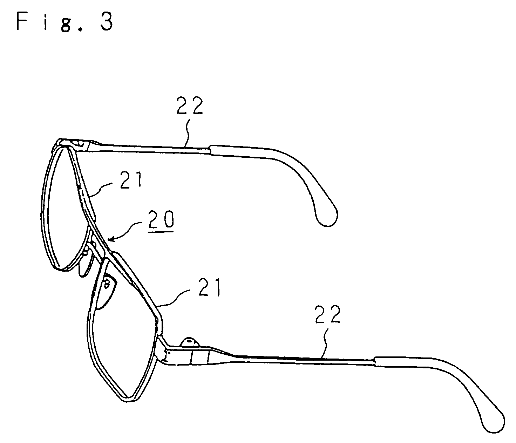

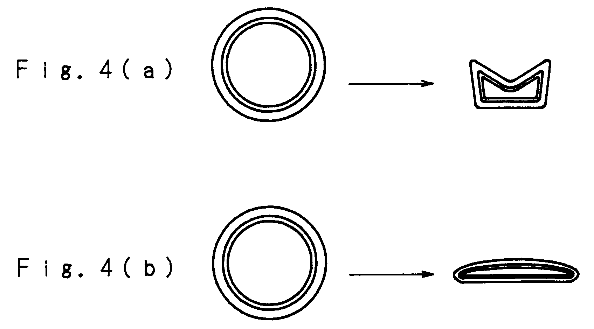

Fig. 3 is a perspective view showing the outside appearance of an eyeglass frame. The eyeglass frame is mainly constituted of rims 21 for holding glasses and temples 22 hung over the ears. Fig. 4 (a) is a cross sectional structural view of the clad wire rod before and after being worked to a rim, while Fig. 4 (b) is a cross sectional structural view of the clad wire rod before and after being worked to a temple. The clad wire rod obtained in the foregoing method is worked through roll forming and turned to a rim with a substantially trapezoid cross section grooved at one face thereof. Or the clad wire rod is formed to a temple by swaging and press forming, with a slender ellipsoidal cross section worked to be flat on one side thereof.

The clad wire rod of the invention to be used for an eyeglass frame will be compared with a comparative clad wire rod to evaluate the bonding state, corrosion resistance and cold workability. At the same time, various kinds of material for the outside layer of the clad wire rod of this invention will be examined.

The round rod core material 11 is a Ni-Ti shape memory alloy composed of Ni:51atom% and Ti:49atom%, with the outside diameter of 55.5mm. The outside layer material is the following materials in Table 1 having an outside diameter of 70mm and a thickness of 7mm, and the intermediate layer material is Ta or Nb foil having a thickness of 0.1mm. Table 1 below indicates the combination of the outside layer material and intermediate layer material used in the clad wire rod of this invention and the conventional comparative example.

**Table 1**

| No. | | Outside layer material | Intermediate layer material |
|---|---|---|---|
| 1 | This Invention | Pure Ti (JIS second group) | Ta |
| 2 | | Ti alloy (Ti-20%V-4%Al-1%Sn) | Ta |
| 3 | | Ni alloy (90%Ni-7%Cr-3%Co) | Ta |
| 4 | | Stainless steel (SUS304) | Ta |
| 5 | | Cu alloy (65%Cu-20.5%Ni-4%Sn-4%Pb-Zn) | Ta |
| 6 | | Pure Ni (Low carbon nickel) | Ta |
| 7 | | Pure Ti (JIS second group) | Nb |
| 8 | Comparative examples | Pure Ti (JIS second group) | Ni |
| 9 | | Pure Ti (JIS second group) | Mo |
| 10 | | Pure Ti (JIS second group) | Stainless steel(SUS304) |
| 11 | | Pure Ti (JIS second group) | Cu |
| 12 | | Pure Ti (JIS second group) | not used |

In the first place, changes in the shape recovery force depending on the cross sectional area ratio of the outside layer to the whole clad wire rod are studied. At first, the cladding material in the combination No. 1 of Table 1, the core material of a Ni-Ti alloy, the intermediate layer of Ta and the outside layer of pure Ti having small flow stress, is assembled. After hot extrusion, by machine cutting pure Ti, five kinds of the clad materials having the sectional area ratios of pure Ti of 10%, 20%, 30%, 33%, 35% are obtained. Each clad material is repeatedly worked through die drawing and softening to have the outside diameter of 2.5mm, subjected to heat treatment at 600°C for ten minutes, whereby the clad wire rod is obtained. Similarly, in the combination No. 2 of Table 1, the core material of a Ni-Ti alloy, the intermediate layer of Ta and the outside layer of a Ti alloy having large flow stress, five kinds of the clad wire rods having the sectional area ratios of the Ti alloy of 10%, 20%, 30%, 33%, 35% are obtained.

**Table 2**

| | Outside layer material | | Recovery rate | |
|---|---|---|---|---|
| | Material | Sectional area ratio | Plastic strain 2% | Plastic strain 6% |
| This invention | Pure Ti | 10% | 98% | 86% |
| | | 20% | 95% | 80% |
| | | 30% | 91% | 70% |
| Comparative examples | | 33% | 85% | 65% |
| | | 35% | 79% | 58% |
| This invention | Ti alloy | 10% | 98% | 86% |
| | | 20% | 94% | 78% |
| | | 30% | 89% | 68% |
| Comparative examples | | 33% | 80% | 60% |
| | | 35% | 73% | 53% |
| | 0% (single alloy) | | 99% | 90% |

Table 2 represents the testing results of the shape recovery force of each of the five kinds of the clad wire rods obtained in the above-described manner. Each clad wire rod is stretched by a tensile tester to add 2% and 6% plastic strain, and then heated to about 120° . The recovery rate is measured afterwards. The same test is conducted for a wire rod of a Ni-Ti alloy alone having the diameter of 2.5mm.

The reason for measuring the recovery rate will be depicted hereinafter.

A shape memory alloy has shape memory effect, super-elastic proprieties and the like. The shape memory alloy, whose greatest characteristic is the shape memory effect as is understood from its name, assumes super-elastic properties as well when the shape memory alloy keeps the effect.

In the clad wire rod of a shape memory alloy of the invention, a different metal is bonded to the shape memory alloy, whereby the functional characteristics (shape memory effect, super-elastic properties, etc.) of each single alloy worsen or deteriorate. As such, it is important to know how much the functional characteristics lower when the different metal is bonded to the shape memory alloy to produce the clad wire rod. In other words, the functional characteristics as above should be maintained although they might slightly lower as compared with those when the clad wire rod is formed of a single alloy. In the case where the clad wire rod is applied to the eyeglass frame, super-elastic properties among the above functional characteristics are utilized. However, it is difficult to quantify the super-elastic properties, and therefore super-elastic properties are confirmed by the shape memory effect which confirmed by the shape recovery rate, because the material with shape memory effect naturally has super-elastic properties.

As is clear from Table 2, each sectional area ratio of pure Ti or Ti alloy of the outside layer is closely related to the recovery rate of the clad wire rod. When 2% plastic strain is added, the recovery rate is 70-80% when the sectional area ratio exceeds 30%, and approximately 90% or higher where the sectional area ratio is not larger than 30%.

When the plastic strain is 6%, the recovery rate of approximately 70% or higher is secured when the sectional area ratio is 30% or lower. When the sectional area ratio exceeds 30%, the recovery rate is merely 50-60%. Therefore, the sectional area ratio of pure Ti and Ti alloy of the outside layer is set to be not larger than 30%.

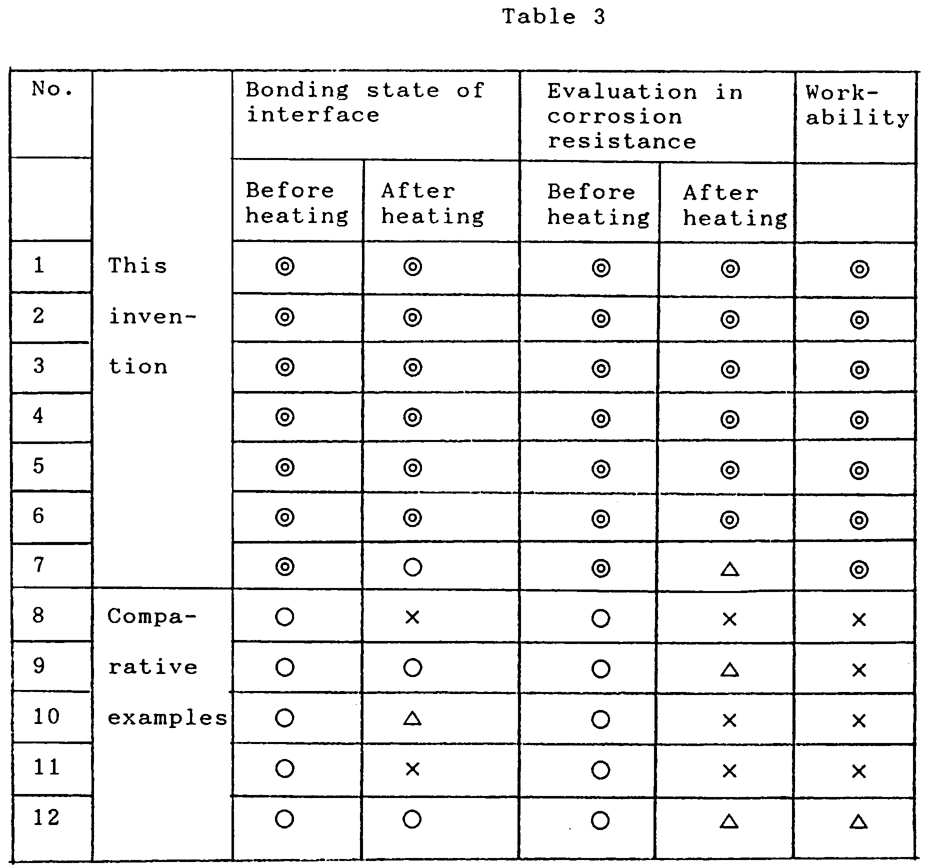

The clad materials in the combinations Nos. 1-12 shown in Table 1 are worked to have the sectional area ratio of 20% on the basis of the above results from Table 2 and outside diameters of 3.2mm and 1.8 mm.

Table 3 indicates the workability of the clad wire rods, bonding state at the bonding interface of the clad wire rod of the outside diameter of 3.2mm and corrosion resistance at the bonding interface. The workability is evaluated from the bonding state after the clad wire rod is worked to a rim or a temple.

The bonding state is evaluated after observing the bonding interface by an electron microscope. On the other hand, the corrosion resistance is evaluated from the bonding state after spraying a corrosion solution containing sodium chloride, acetic acid and copper chloride to the clad wire rod for a predetermined time.

The bonding state and corrosion resistance are tested before heating and after heated to the hard soldering temperature (not lower than 900°C) necessary for fabricating the eyeglass frame.

ⓞ in table 3 indicates that no defect is observed at the bonding interface through the electron microscope at 2000 magnification. ○ means that several vacancy defects, namely, voids are observed, while △ means that many voids are observed, and X means that debonding is observed at the bonding interface.

As is apparent from Table 3, the clad wire rods Nos. 1-6 having the Ta intermediate layer are superior in all the testing items.

The bonding state at the interface of the clad wire rod No. 7 in which the intermediate layer is formed of Nb is excellent before heating but just good after heating, and the corrosion resistance before heating is excellent as well. The workability to a rim or a temple is also excellent. However, the corrosion resistance deteriorates after heating, because an intermetallic compound with inferior corrosion resistance is supposed to be produced in the Nb interface.

As to further examine the influences of heat on the clad wire rod No. 7 by changing the heating temperatures, the corrosion resistance is tested. When the heating temperature is over 800°C, the corrosion resistance deteriorates greatly. The deterioration occurs at the interface between the Ti core material and the Nb intermediate layer. As mentioned before, since the temperature in the vicinity of the soldering part in fabricating of the eyeglass frame sometimes exceeds 900°C, the clad wire rod No. 7 eventually deteriorates in corrosion resistance.

Ta has a higher melting point than Nb, and therefore, the diffusion speed of metallic atoms at the bonding interface during the heating is slower than that of Nb. Accordingly, the resultant intermetallic compound is thinner. Ta is thus more effective than Nb from the viewpoint of the corrosion resistance.

When the clad wire rod No. 7 is used for the eyeglass frame, it is probable that the corrosion resistance worsens from hard soldering, which damages the appearance of the frame in the long time use.

From the above facts, the clad wire rods Nos. 1-6 are suitable for the material not only of eyeglass frame but also of other ornaments owing to the excellent workability in producing parts, and excellent bonding state and corrosion resistance after soldering.

The No. 7 clad wire rod, showing an excellency in the bonding interface after cold working, is suitable for the material of ornament, since some ornaments are produced without hard soldering. That is, it is essential to select the intermediate material according to the purpose, because there are such an ornament having a complicated shape as an eyeglass frame fabricated from many parts by hard soldering after being formed through various cold workings and such an ornament as a bracelet produced through a simpler process of surface treatment after cold working.

The clad wire rods Nos. 8, 10, 11 having the intermediate layer respectively formed of Ni, stainless steel, Cu are good in bonding states and corrosion resistances before heating, but generate many voids at the bonding interface after heating and therefore the clad wire rods Nos. 8, 10, 11 are found to be inferior in corrosion resistance. Further, the clad wire rods worked to a rim or a temple debond at the bonding interface, hence workability is poor. This is because the bonding force at the bonding interface is insufficient to withstand being worked.

The clad wire rod No. 9 having the intermediate layer of Mo shows good bonding state of the interface both before and after heating. However, the corrosion resistance deteriorates after heating. The bonding interface of the clad wire rod No. 9 debonds after being worked to a rim or a temple, which means poor workability. The clad wire rod No. 12 having no intermediate layer shows the interface bonding state and corrosion resistance approximately equal to those of the clad wire rod No. 9. When this clad were No. 12 is worked to a rim or a temple, debonding is sometimes brought about and it is difficult to say that the clad wire rod No. 12 has sufficient workability.

Although the Ni-Ti alloy of the round rod core material 11 is composed of 47-60atom%Ni and Ti in the remaining, a part of Ti may be replaced by one or plural elements such as Cu, V, Mo, Cr, Al, Co, Fe, etc., of not larger than 5 atom%.

Moreover, although Ti-20%V-1%Al is used for the Ti alloy of the outside layer in the foregoing embodiment, it is possible to use an alloy mainly composed of Ti to which one or plural elements of Al, Sn, Zr, Mo, Si, V, Mn, Cr, Fe, etc., are doped. Likewise, although 90%Ni-7%Cr-3%Co is served as the Ni alloy in the embodiment, an alloy mainly composed of Ni to which one or plural elements of Cr, Cu, Fe, Ag, Si, S, Pb, Pt, Au, rare earth, Ti, Nb, Al, Mo Sn, Co, etc. are doped may be employed.

Further, Ta or Nb is used for the intermediate layer in the embodiment, a Ta alloy or a Nb alloy containing more than 90% Ta or Nb may be employed.

Another embodiment of this invention will now be discussed hereinafter with reference to the accompanying drawings.

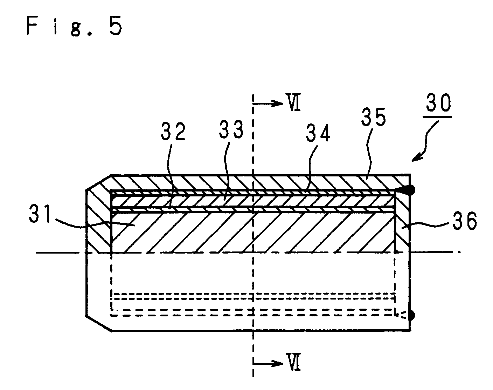

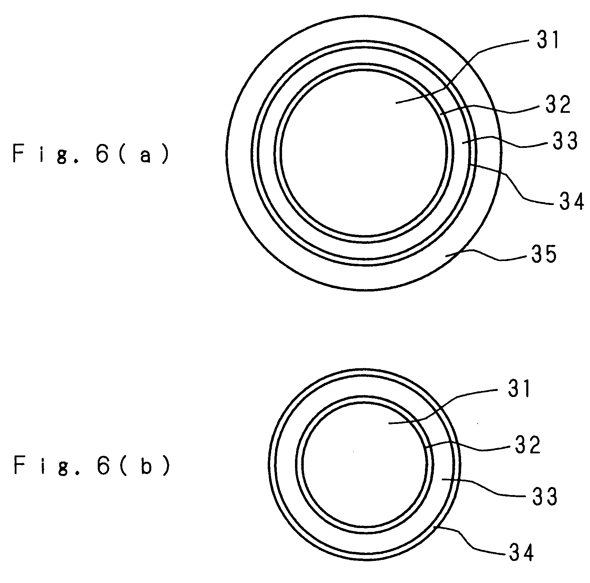

Fig. 5 is a longitudinal cross sectional view showing the constitution of a cladding material used for a gold-clad shape memory alloy wire rod in another embodiment of this invention. Fig. 6(a) is a lateral cross sectional view taken along the line VI-VI of Fig. 5. A cladding material 30 has a round rod core material 31 made of a Ni-Ti alloy fitted in an intermediate layer material 32, which is in turn fitted in a pipe 34 of gold or gold alloy intervening a metallic pipe 33, and subsequently fitted in an outermost bottomed cylindrical layer material 35 of low carbon steel. The metallic pipe 33 is made of pure Ni, a Ni alloy, Cu alloy, or Co alloy.

A shape memory alloy used for the core material 31 is composed of Ni: 51atom% and Ti:49atom% having the outside diameter of 49.9mm. The intermediate layer material 32 is a 0.1mm thick Ta foil, and the metallic pipe 33 is a pure Ni pipe having the outside diameter of 53.5mm and the inside diameter of 50.3mm. The gold alloy pipe 34 is made of K18 alloy of 75%Au-12.5%Ag-12.5%Cu which has the outside diameter of 55.5mm and the thickness of 0.6mm. The outermost layer material 35 is low carbon steel pipe having the outside diameter of 67.0mm and the inside diameter of 56.0mm.

A lid of the same material is securely welded to an opening of the outermost layer material 35 by electron beam welding in a vacuum chamber maintained at a predetermined degree of vacuum, so that a lid 36 is formed. The cladding material 30 is kept in the high vacuum state of approximately 2-3×10⁻⁴ Torr inside. The thus-obtained cladding material is heated to 800°C, and subjected to hot extrusion by an extrusion press to have the outside diameter of 20mm. Then after repeating cold drawing and softening at 600°C to have the outside diameter of 8.5mm, then soaking the clad wire rod in a tank of hydrochloric acid to remove the low carbon steel of the outermost layer to expose the gold alloy, the clad wire rod of the 1.8-3.2mm outside diameter is obtained subsequent to the additionally repeated cold drawing and softening. The cross section of the obtained clad wire rod is indicated in Fig. 6(b).

As eyeglass frame is fabricated with the use of the clad wire rod produced in the above-described manner.

Specifically, the clad wire rod is worked to a temple and bridge as shown in Fig. 4(b) by swaging and press forming, and fabricated to an eyeglass frame.

When observing the bonding state of the worked temple and bridge of the clad wire rod by an electron microscope after soldering, no void or the like defect is observed at each bonding interface, which assures a good bonding state.

Meanwhile, when the clad wire rod is worked to various shapes of accessories such as a bracelet, etc., the bonding interface never debonds, which indicates favorable workability.

As for the embodiment, when producing a gold shape memory alloy clad wire rod employing a Nb foil instead of the Ta foil and working it to an ornament such as a bracelet, etc., no defect such as debonding occurs at the bonding interface, which shows good workability.

Further, when producing a gold-clad shape memory wire rod by employing a K18 alloy pipe composed of 75%Au-12.5%Ag-12.5%Cu having the outside diameter of 55.5mm and the inside diameter of 50.3mm instead of the metallic pipe 33, and working it to an ornament such as a bracelet, etc., no defect such as debonding occurs at the bonding interface, which shows good workability.

Therefore, when the clad wire rod of this invention is applied to the ornament such as an eyeglass frame, the product is considerably pliant to fit the body by taking advantage of the super-elastic properties of the shape memory alloy.

Even when applying a Ni alloy of 90%Ni-7%Cr-1%Al, a Cu alloy of 65%Cu-20.5%Ni-4%Sn-4%Pb-Zn, or a Co alloy of 41%Co-39.3%Ni-16.8%Cr-2.5%Mo instead of pure Ni for producing the gold-clad shape memory alloy wire rod to obtain an ornament such as an eyeglass frame or the like, there is no particular problem.

Although the gold-clad shape memory alloy is clad by gold or gold alloy, the gold or gold alloy may be replaced by precious metals such as silver, palladium, platinum or their alloys.

According to this invention, since the shape memory alloy is employed for the core material, and Ta, Nb or their alloys is interposed between the core material and the outside layer material, the bonding force at the interface of the shape memory alloy and the outside layer material improves, which enhances the workability. Especially by means of interposing Ta, the clad wire rod is able to withstand various complex workings when being worked to an ornament such as an eyeglass frame, etc. because the intermetallic compound generated at the interface of Ta is superior in the corrosion resistance.

The reason of the improvement in workability resulting from interposing Ta, Nb or their alloys is as follows.

Good workability means generating no debonding, voids, etc. at the bonding interface when the clad wire rod is subjected to plastic working such as drawing process, rim process, temple process or the like, and mechanical working such as cutting, grinding or polishing, and soldering if necessary. It means that since the debonding part brought about during the working is unable to conform to the designed size or shape, the material of poor workability is worthless.

Moreover, since the material receives internal stresses in various directions at the working time, the bonding force able to stand the stresses is required at the interface. If the bonding force is weak, only a little working suddenly invites debonding at the bonding interface. Therefore, workablilty is regarded to be good if the bonding force at the interface is strong.

Ta, Nb or their alloys is a metal of a high melting point and superior in cold workability without producing an intermetallic compound in the diffusion bonding, which lowers the bonding force, with almost every kind of metal. Therefor, Ta, Nb or their alloys ensures strong bonding force when it is bonded to almost any kind of metal.

The scope of the invention is defined by the appended claims rather than by the description preceding it.

## Claims

1. A clad wire rod comprising:
a core made of a shape memory alloy, said shape memory alloy being a Ni-Ti alloy;
an outside layer for covering the core, made of a metal other than a shape memory alloy;
an interposed layer between the core and the outside layer, said interposed layer being made of Ta, a Ta alloy, Nb or a Nb alloy; and
wherein the sectional area ratio of the outside layer to the whole clad wire rod is not larger than 30%.

2. A clad wire rod according to Claim 1, wherein said outside layer is made of one of the following: pure Ti or a Ti alloy; pure Ni or a Ni alloy; stainless steel; a Cu alloy.

3. A clad wire rod according to Claim 1, wherein said outside layer is made of a precious metal, preferably one of the following: gold or gold alloy; silver or silver alloy; palladium or palladium alloy; platinum or platinum alloy.

4. A clad wire rod according to Claim 1, wherein said outside layer is made of a Co alloy.

5. A clad wire rod according to Claim 1, wherein said outside layer consists of a first layer made of a precious metal, and a second layer made of metal except for the metal of the first layer.

6. A clad wire rod according to Claim 5, wherein said precious metal is one of the following: gold or gold alloy; silver or silver alloy; palladium or palladium alloy; platinum or platinum alloy.

7. A clad wire rod according to Claim 5, wherein the second layer of the outside layer is made of one of the following: pure Ni or a Ni alloy; a Cu alloy; a Co alloy.

8. An ornament using the clad wire rod according to any preceding Claim.

## Patentansprüche

1. Ein plattierter Runddraht, umfassend:
einen Kern aus einer Legierung mit Formerinnerungsvermögen, wobei die besagte Legierung mit Formerinnerungsvermögen eine Ni-Ti-Legierung ist;
eine Außenschicht als Ummantelung des Kerns aus einem Metall anderer Art als der Legierung mit Formerinnerungsvermögen;
eine Zwischenschicht zwischen dem Kern und der Außenschicht, wobei die besagte Zwischenschicht aus Ta, einer Ta-Legierung, Nb oder einer Nb-Legierung besteht; und
bei dem die Querschnittfläche des Außenschicht nicht größer ist als 30 % der Querschnittfläche des gesamten plattierten Runddrahts.

2. Ein plattierter Runddraht nach Anspruch 1, bei dem die besagte Außenschicht aus einem der folgenden Werkstoffe besteht: reinem Ti oder einer Ti-Legierung; reinem Ni oder einer Ni-Legierung; rostfreiem Stahl; einer Cu-Legierung.

3. Ein plattierter Runddraht nach Anspruch 1, bei dem die besagte Außenschicht aus einem Edelmetall besteht, und zwar vorzugsweise einem der folgenden Metalle: Gold oder Goldlegierung; Silber oder Silberlegierung; Palladium oder Palladiumlegierung; Platin oder Platinlegierung.

4. Ein plattierter Runddraht nach Anspruch 1, bei dem die besagte Außenschicht aus einer Co-Legierung besteht.

5. Ein plattierter Runddraht nach Anspruch 1, bei dem die besagte Außenschicht aus einer ersten aus Edelmetall gefertigten Schicht und einer zweiten aus einem Metall anderer Art als dem der ersten Schicht gefertigten Schicht besteht.

6. Ein plattierter Runddraht nach Anspruch 5, bei dem das besagte Edelmetall eines der folgenden Metalle ist: Gold oder Goldlegierung; Silber oder Silberlegierung; Palladium oder Palladiumlegierung; Platin oder Platinlegierung.

7. Ein plattierter Runddraht nach Anspruch 5, bei dem die zweite Schicht der Außenschicht aus einem der folgenden Metalle besteht: reinem Ni oder einer Ni- Legierung; einer Cu-Legierung; einer Co-Legierung.

8. Ein Ornament unter Verwendung des plattierten Runddrahts nach einem der vorstehenden Ansprüche.

## Revendications

1. Barre à fil gainée comprenant :
un noyau constitué d'un alliage à mémoire de forme, ledit alliage à mémoire de forme étant un alliage de Ni-Ti ;
une couche extérieure pour couvrir le noyau, constituée d'un métal autre qu'un alliage à mémoire de forme ;
une couche interposée entre le noyau et la couche extérieure, ladite couche interposée étant constituée de Ta, d'un alliage de Ta, de Nb ou d'un alliage de Nb ; et
dans laquelle le rapport de superficie de la coupe transversale de la couche extérieure à celle de la barre à fil gainée n'est pas supérieur à 30%.

2. Barre à fil gainée selon la Revendication 1, dans laquelle ladite couche extérieure est constituée d'un des éléments suivants : pur Ti ou alliage de Ti ; pur Ni ou alliage de Ni ; acier inoxydable ; alliage de Cu.

3. Barre à fil gainée selon la Revendication 1, dans laquelle la couche extérieure est constituée d'un métal précieux, de préférence l'un des suivants : or ou alliage d'or ; argent ou alliage d'argent ; palladium ou alliage de palladium ; platine ou alliage de platine.

4. Barre à fil gainée selon la Revendication 1, dans laquelle la couche extérieure est constituée d'un alliage de Co.

5. Barre à fil gainée selon la Revendication 1, dans laquelle ladite couche extérieure est constituée d'une première couche réalisée en métal précieux, et d'une deuxième couche réalisée en un métal autre que le métal de la première couche.

6. Barre à fil gainée selon la Revendication 5, dans laquelle ledit métal précieux est l'un des suivants : or ou alliage d'or ; argent ou alliage d'argent ; palladium ou alliage de palladium ; platine ou alliage de platine.

7. Barre à fil gainée selon la Revendication 5, dans laquelle la deuxième couche de la couche extérieure est constituée de l'un des éléments suivants : pur Ni ou alliage de Ni ; alliage de Cu ; alliage de Co.

8. Ornement utilisant la barre à fil gainée selon l'une quelconque des revendications précédentes.
